# EUROPEAN PATENT APPLICATION

(11) **EP 1 628 482 A2**
(43) Date of publication of application: **22.02.2006**
(21) Application number: 05254656.1
(22) Date of filing: 27.07.2005
(51) Int. Cl.: H04N 7/16

(54) **Method and apparatus for transmitting copy control information**

(30) Priority: 13.08.2004 KR 2004063959
(71) Applicant: SAMSUNG ELECTRONICS CO., LTD., Suwon-si, Gyeonggi-do (KR)
(72) Inventor: Kim, Chi-hurn 211-1604 Shinyeongtong, Taean-eup, Hwaseong-si, Gyeonggi-do (KR); Choi, Moon-young, Gangnam-gu, Seoul (KR); Park, Jong-wook, Gangnam-gu, Seoul (KR); Choi, Yang-lim, Bundang-gu, Seongnam-si, Gyeonggi-do (KR); Jun, Goo, Suwon-si, Gyeonggi-do (KR)
(74) Representative: Brandon, Paul Laurence

(57) **Abstract**

A method of transmitting copy control information in a video data transmitting/receiving system is provided. The method includes: decoding compressed contents into prior-to-compression contents; generating packets including the decoded contents and the copy control information; and transmitting the packets through a predetermined link. An unauthorized copying of the decoded video data is prevented.

## Description

The present invention relates to video data transmitting/receiving systems, and, more particularly, but not exclusively, to copy control information processing in a video data transmitting/receiving system.

Video data is transmitted in a compressed format in part because of a large size of the video data and in part because of the quantity of the video data transmitted, i.e., often, a very large amount of the video data is transmitted such as a movie. In order to reproduce the compressed video data, a decoder that can decode the compressed video data is required. Requiring a decoder results in an increase in the price of a video reproducing device. That is, a decoder that can decode highly compressed video data is very expensive.

The Institute of Electrical and Electronics Engineers (IEEE) recommends using an IEEE 1394 bus, which can transmit video data at a low compression ratio. The compression ratio is a value used to describe the reduction in size of the data. For example if 1 Megabyte of data is compressed to 128 Kilobytes, the compression ratio is 1,048,576 divided by 131,072 or 8. This represents a compression ratio of 8:1 meaning the compressed file is 1/8th the size of the original file. Today, standard definition (SD) video data can be transmitted through the IEEE 1394 bus without data loss.

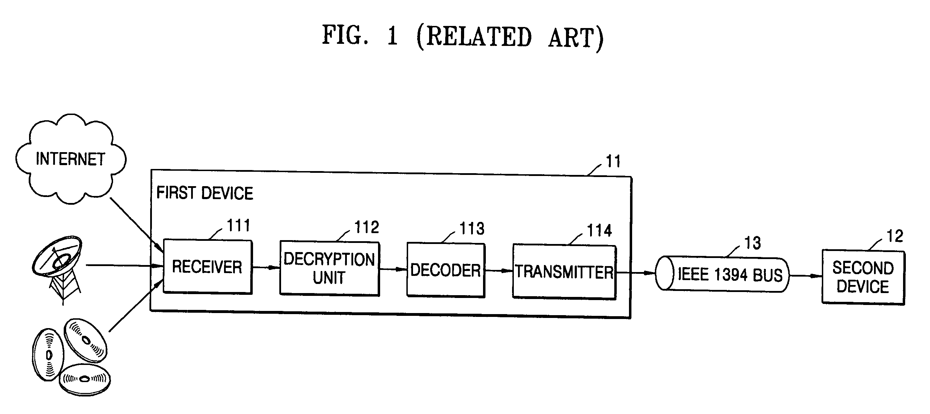

FIG. 1 is a schematic block diagram of a conventional video data transmitting/receiving system.

Referring to FIG. 1, the conventional video data transmitting/receiving system includes a first device 11, a second device 12, and an IEEE 1394 bus 13.

The first device 11 includes a receiver 111, a decryption unit 112, a decoder 113, and a transmitter 114.

The receiver 111 receives data from a remotely located content provider, for example, as depicted in FIG. 1. For example, as depicted in FIG. 1, the receiver 111 receives data from a remotely located content provider via the Internet network, a satellite communication, or by reading the data off a recording medium. The received data includes data in an encrypted and compressed format, copy control information, and so on. That is, the receiver 111 receives the encrypted and compressed data to prevent the illegal distribution of the contents and to transmit the contents stably. Also, the receiver 111 receives the copy control information to prevent the contents from being copied without authority. If the contents are video data, the contents are compressed in a Moving Picture Experts Group (MPEG) format, and then, the compressed video data is transmitted.

The decryption unit 112 decrypts the encrypted MPEG data included in the received data into the MPEG data.

The decoder 113 decodes the MPEG data into the video data. The decoder 113 decrypts the MPEG data based on a compression method used on the video data.

The transmitter 114 transmits the decrypted video data through the IEEE 1394 bus 13. Since the IEEE 1394 bus 13 can transmit the SD video data without data loss, the transmitter 114 directly transmits the decrypted video data to the IEEE 1394 bus 13.

Thus, once the video data encrypted and compressed by a certain device is decrypted, the conventional video data transmitting/receiving system cannot control the copying of the decrypted video data. That is, once the data protected by the encryption is decrypted, the data may be copied without authorization.

Preferred embodiments of the present invention aim to provide an apparatus and method capable of preventing video data decrypted from encrypted and compressed video data from being copied without authority.

Preferred embodiments of the present invention also aim to provide a computer-readable recording medium storing the method.

Illustrative, non-limiting embodiments of the present invention may overcome the above disadvantages and other disadvantages not described above. The present invention is not necessarily required to overcome any of the disadvantages described above, and the illustrative, non-limiting embodiments of the present invention may not overcome any of the problems described above. The appended claims should be consulted to ascertain the true scope of the invention.

According to an aspect of the present invention, a method of transmitting copy control information is provided. The method includes: decoding compressed contents into prior-to-compression contents; generating packets that include the decoded contents and the copy control information; and transmitting the packets through a predetermined link.

According to an aspect of the present invention, an apparatus for transmitting copy control information is provided. The apparatus includes: a decoder for decoding compressed contents into prior-to-compression contents; a packet generator for generating packets that include the decoded contents and the copy control information; and a transmitter for transmitting the packets through a predetermined link.

According to yet another aspect of the present invention, there is provided a computer-readable recording medium storing a method of transmitting copy control information. The method includes: decoding compressed contents into prior-to-compression contents; generating packets having the decoded contents and the copy control information added thereto; and transmitting the packets through a predetermined link.

According to an aspect of the present invention, a method of transmitting copy control information is provided. The method includes: decoding contents compressed in a first compression operation into prior-to-compression contents; compressing the decoded contents by encrypting the decoded contents in a second compression operation including a lower compression ratio than the first compression operation; generating packets that include the compressed contents and the copy control information; and transmitting the packets through a predetermined link.

According to an aspect of the present invention, an apparatus for transmitting copy control information is provided. The apparatus includes: a decoder for decoding contents compressed in a first compression operation into prior-to-compression contents; an encoder for compressing the decoded contents by encrypting the decoded contents in a second compression operation having a lower compression ratio than the first compression operation; a packet generator for generating packets that include the compressed contents and the copy control information; and a transmitter for transmitting the packets through a predetermined link.

According to an aspect of the present invention, there is provided a computer-readable recording medium storing a method of transmitting copy control information. The method includes: decoding contents compressed in a first compression operation into prior-to-compression contents; compressing the decoded contents by encrypting the decoded contents in a second compression operation having a lower compression ratio than the first compression operation; generating packets including the compressed contents and the copy control information; and transmitting the packets through a predetermined link.

Further features of the present invention are set out in the appended claims.

The present invention will now be described in detail by describing illustrative, non-limiting embodiments thereof with reference to the accompanying drawings. In the drawings, the same reference characters denote analogous elements:
FIG. 1 is a schematic block diagram of a conventional video data transmitting/receiving system;
FIG. 2 is a schematic block diagram of a video data transmitting/receiving system according to a first illustrative, non-limiting embodiment of the present invention;
FIG. 3 is a schematic block diagram of a video data transmitting/receiving system according to a second illustrative, non-limiting embodiment of the present invention;
FIG. 4 is a flowchart illustrating a method of transmitting copy control information according to the first exemplary embodiment of the present invention; and
FIG. 5 is a flowchart illustrating a method of transmitting copy control information according to the second exemplary embodiment of the present invention.

Exemplary, non-limiting embodiments of the present invention will now be described in detail with reference to the accompanying drawings.

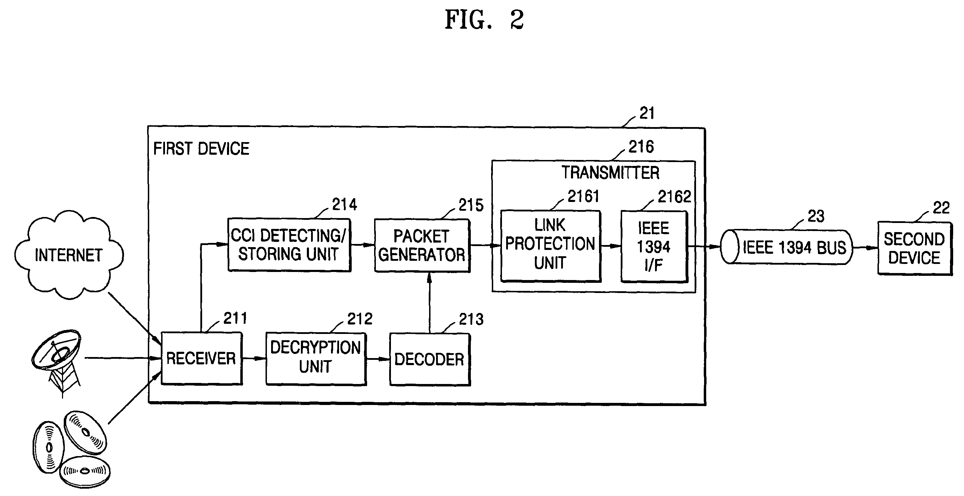

FIG. 2 is a schematic block diagram of a video data transmitting/receiving system according to a first illustrative, non-limiting embodiment of the present invention.

Referring to FIG. 2, the video data transmitting/receiving system includes a first device 21, a second device 22, and an IEEE 1394 bus 23. The first device 21 and the second device 22 may be consumer electronics (CE) devices or personal computers (PCs). For example the first device 21 may be a set-top box or a digital video disk (DVD) player and the second device 22 may be a digital television (DTV) or a personal video recorder (PVR).

The first device 21 includes a receiver 211, a decryption unit 212, a decoder 213, a copy control information (CCI) detecting/storing unit 214, a packet generator 215, and a transmitter 216.

The receiver 211 receives data from a remotely located content provider. When the content provider provides the contents to a plurality of devices remotely located, the contents are encrypted so as to prevent the unauthorized usage of the contents. If the size of the contents is large, the content are compressed for rapid and smooth transmission. By way of an example, if the contents are video data, the contents can be compressed in an MPEG format, and then, the compressed contents in MPEG format are transmitted.

That is, the receiver 211 receives the encrypted and compressed data. The receiver 211 may receive the data through a network, such as the Internet, through a satellite communication, or by reading data recorded on a DVD, depending on the contents providing methods of the content provider.

The decryption unit 212 decrypts the encrypted MPEG data included in the received data into the MPEG data. The decryption unit 212 decrypts the MPEG data according to the encryption method (for example, Diffie-Hellman method) used to encrypt the video data.

The decoder 213 decodes the MPEG data into the video data. The decoder 213 decodes the MPEG data according to the compression method (for example, MPEG 2) applied to the video data.

The CCI detecting/storing unit 214 detects CCI from the received data and then stores the detected CCI. The CCI is used to control the copying of the video data. The CCI may have a value of "00", "10" or "11". By way of an example, the CCI having a value of "00" indicates that the video data can be copied unlimited numbers of times. The CCI having a value of "10" indicates that the video data can be copied once, and "11" indicates that the video data cannot be copied. When the CCI detecting/storing unit 214 detects the CCI different from the stored CCI, the CCI detecting/storing unit 214 deletes the stored CCI and then stores the detected CCI. This generally occurs when the type of contents is changed.

The packet generator 215 generates packets including the decrypted and decoded video data and the stored CCI. The packet generator 215 reads the CCI from the CCI detecting/storing unit 214 each time the packets are generated. Thus, without considering the timing of detecting the CCI and the timing of generating the packets, it is possible to generate a CCI equal to the CCI detected from the received data. The detecting and storing process of the CCI detecting/storing unit 214 is much simpler than the decoding processes of the decryption unit 212 and the decoder 213. Thus, the CCI detecting/storing unit 214 finishes the detecting and storing process before the decoder 213 finishes the decoding process.

In this exemplary embodiment of the present invention, the IEEE 1394 bus 23 is used as a link for transmitting the packets generated by the packet generator 215 to the second device 22. Accordingly, the packet generator 215 generates the packet in the MPEG-TS (transport stream) format, which satisfies the transmission specifications of IEEE 1394.

IEEE 1394 is a specification for a high speed serial bus proposed by the IEEE. The IEEE 1394 bus is used to connect peripheral devices, in addition to connecting CE devices. Specifically, according to the IEEE 1394 specification that was recently announced (IEEE 1394TA 2003003 rev. 1.5, Dec. 9, 2004), Standard Definition (SD) video data can be transmitted through the IEEE 1394 bus without any data loss. In view thereof, the IEEE 1394 bus 23 is used in this exemplary embodiment of the present invention to transmit data from the first device 21 to the second device 22.

The transmitter 216 transmits the packets generated by the packet generator 215 through the IEEE 1394 bus 23. The transmitter 216 includes a link protection unit 2161 and an IEEE 1394 interface 2162.

The link protection unit 2161 protects the IEEE 1394 bus 23, the packet transmission link, based on the digital transmission content protection (DTCP). In particular, the link protection unit 2161 encrypts the video data contained in the packet based on the DTCP, such that illegal distribution of the video data can be prevented.

The IEEE 1394 interface 2162 transmits the packets containing the encrypted video data to the IEEE 1394 bus 23 so as to transmit the packets to the second device 22.

The second device 22 receives the packets from the first device 21 through the IEEE 1394 bus 23 and copies the video data according to the CCI contained in the packet. In this exemplary embodiment, the copying of the video data is the storing of the video data in a storage medium such as a hard disk or the like, which is embedded in the second device 22. The copying of the video data according to the CCI can be performed using various methods. For example, the CCI can be used as information to generate an encryption key. If the CCI is "00", the decoding of the video data is permitted. On the other hand, if the CCI is "11", the decoding of the video data is prohibited. In this manner, the second device 22 can perform copying according to the CCI.

Also, if the second device 22 is a device such as a DTV, which can reproduce video data, the second device 22 decrypts the encryption video data contained in the packet into the original video data according to the DTCP and then reproduces the video data.

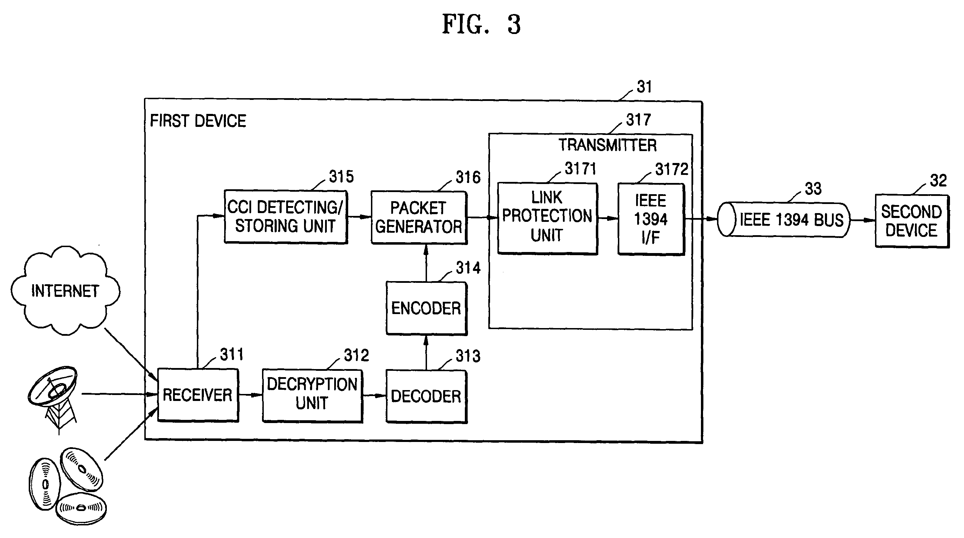

FIG. 3 is a schematic diagram of a video data transmitting/receiving system according to a second, illustrative, non-limiting embodiment of the present invention.

Referring to FIG. 3, the video data transmitting/receiving system includes a first device 31, a second device 32, and an IEEE 1394 bus 33. The first device 31 and the second device 32 may be CE devices or PCs. Specifically, the first device 31 may be a set-top box or a DVD player and the second device 2 may be a DTV or a PVR.

The first device 31 depicted in FIG. 3 includes a receiver 311, a decryption unit 312, a decoder 313, an encoder 314, a CCI detecting/storing unit 315, a packet generator 316, and a transmitter 317.

The receiver 311 receives data from a remotely located content provider. When the content provider provides the contents to a number of remotely located devices, the contents are encrypted so as to prevent unauthorized use of the contents. If the size of the contents is large, the contents are compressed for rapid and smooth transmission. If the contents are video data, the contents can be compressed in an MPEG format, for example, and then transmitted in this compressed format.

That is, the receiver 311 receives the encrypted and compressed data. The receiver 311 may receive the data through a network, such as the Internet, or through satellite communication, or by reading out data recorded on a DVD, depending on the contents providing method of the content provider.

The decryption unit 312 decrypts the encrypted MPEG data including the received data into the MPEG data. The decryption unit 312 decrypts the MPEG data according to the encryption method (for example, Diffie-Hellman method) used to encrypt the MPEG data.

The decoder 313 decodes the MPEG data into the video data. The decoder 313 decodes the MPEG data according to the compression method (for example, MPEG 2) applied to the video data.

The encoder 314 again compresses the contents decoded by the decoder 313 by performing an encoding process with a much lower compression ratio than the compression method (for example, MPEG 2) applied to the video data. An example of a compression method having a much lower compression ratio than MPEG 2 is a "Light Codec", which was developed by Oxford Semiconductor Ltd. By way of an example, while the Light Codec has a compression ratio of 10:1, MPEG 2 has a compression ratio of 100:1. Specifically, compared with the MPEG 2, a small number of components are used to implement the Light Codec and the components are very cheap. Also, to perform the encoding and decoding processes in accordance with the Light Codec compression takes less time.

The CCI detecting/storing unit 315 detects CCI from the received data and then stores the detected CCI. As described above, the CCI is used to control the copying of the video data. When the CCI detecting/storing unit 315 detects CCI different from the stored CCI, it deletes the stored CCI and then stores the detected CCI. This generally occurs when the type of contents is changed.

The packet generator 316 generates packets including the decoded video data and the stored CCI. The packet generator 316 reads the CCI from the CCI detecting/storing unit 315 each time the packets are generated. Thus, without considering the timing of detecting the CCI and the timing of generating the packets, it is possible to generate a CCI equal to the CCI detected from the received data. The detecting and storing process of the CCI detecting/storing unit 315 is much simpler than the decoding processes of the decryption unit 312 and the decoder 313, and the encoding process of the encoder 314. Thus, the CCI detecting/storing unit 315 finishes the detecting and storing process before the encoder 314 finishes the encoding process.

In this exemplary embodiment, the IEEE 1394 bus 33 is used as a link for transmitting the packets generated by the packet generator 316 to the second device 32. Accordingly, the packet generator 316 generates the packets in the MPEG-TS format, which satisfies the transmission specifications of IEEE 1394.

According to the IEEE 1394 specification that was recently announced (IEEE 1394TA 2003003 rev. 1.5, Dec. 9, 2004), standard definition (SD) video data can be transmitted through the IEEE 1394 bus without any data loss. However, according to a previous version of the IEEE 1394 bus specification (IEEE 1394-2000 and IEEE 61883-4), SD video data could not be smoothly transmitted through the IEEE 1394 bus. Hence, for the older version of the IEEE 1394, the compressed video data can be transmitted through the IEEE 1394 bus by additionally providing the encoder 314 that encodes the data according to a compression method, such as the Light Codec, which has a low compression ratio.

The transmitter 317 transmits the packets generated by the packet generator 317 through the IEEE 1394 bus 33. The transmitter 317 includes a link protection unit 3171 and an IEEE 1394 interface 3172.

The link protection unit 3171 protects the IEEE 1394 bus 33, that is, the packet transmission link, based on the DTCP. Specifically, the link protection unit 3171 encrypts the video data contained in the packet based on the DTCP such that illegal distribution of the video data can be prevented.

The IEEE 1394 interface 3172 transmits the packets containing the encrypted video data to the IEEE 1394 bus 33 so as to transmit the packets to the second device 32.

The second device 32 receives the packets from the first device 31 through the IEEE 1394 bus 33 and copies the video data according to the CCI contained in the packet. In this exemplary embodiment of the present invention, the copying of the video data by the second device 32 is simply storing the video data in a storage medium, such as a hard disk or the like, which is embedded in the second device 32. The copying of the video data according to the CCI can be performed using various methods. For example, the CCI can be used as information to generate an encryption key. By way of an example, if the CCI is "00", the decoding of the video data is permitted. On the other hand, if the CCI is "11", the decoding of the video data is prohibited. In this manner, the second device 32 can perform copying according to the CCI.

Also, if the second device 32 is a device such as a DTV, which can reproduce video data, the second device 32 decrypts the encryption video data contained in the packet into the original video data according to the DTCP, and then reproduces the decrypted video data.

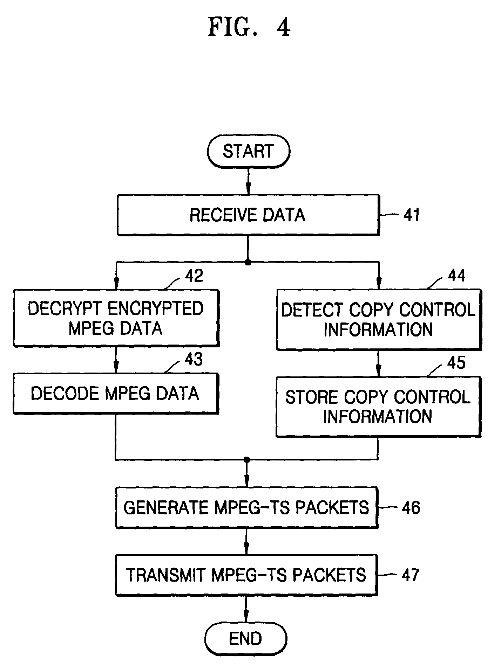

FIG. 4 is a schematic diagram illustrating a method of transmitting the CCI according to the first, exemplary, embodiment of the present invention.

Referring to FIG. 4, the method of transmitting the CCI is performed by the first device 21 illustrated in FIG. 2. Accordingly, the above description of the first device 21 is applicable to the method described below.

In an operation 41, the first device 21 receives data from a remotely located content provider. Next, in an operation 42, the first device 21 decrypts the encrypted MPEG data included in the received data into the MPEG data. In an operation 43, the first device 21 decodes the MPEG data into the video data. Then in an operation 44, the first device 21 detects the CCI from the received data. The detected CCI is stored in the first device, as depicted in an operation 45. In an operation 46, the first device 21 generates packets, which include the decoded video data and the stored CCI.

For example, the first device 21 generates these packets in the MPEG-TS format, which satisfies the transmission specification using the IEEE 1394 bus.

Finally, in an operation 47, the first device 21 transmits the MPEG-TS packets to the second device 22 through the IEEE 1394 bus 23. Specifically, the first device 21 protects the IEEE 1394 bus 23 according to the DTCP and transmits the MPEG-TS packets to the second device 22 through the IEEE 1394 bus 23.

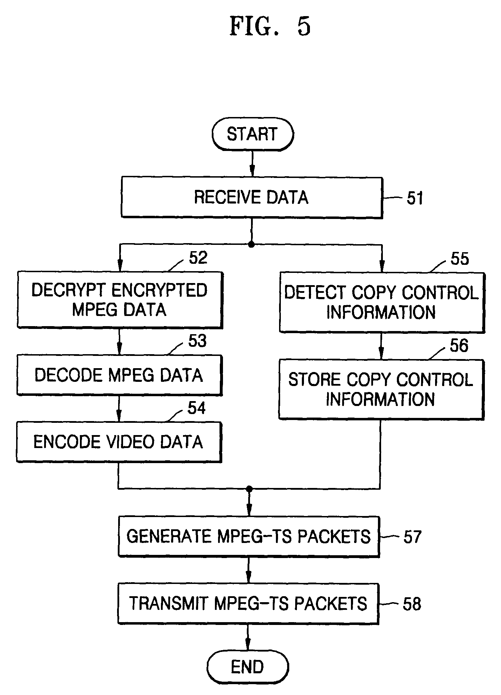

FIG. 5 is a flowchart illustrating a method of transmitting the CCI according to the second exemplary embodiment of the present invention.

Referring to FIG. 5, the method for transmitting the CCI is performed by the first device 31 illustrated in FIG. 3. Accordingly, the above description of the first device 31 is applicable to the method described below.

In an operation 51 depicted in FIG. 5, the first device 31 receives data from a remotely located content provider. Next, in an operation 52, the first device 31 decrypts the encrypted MPEG data included in the received data into the MPEG data. In an operation 53, the first device 31 decodes the MPEG data into the video data. Then, in an operation 54, the first device 31 again compresses the contents decrypted in operation 53. At this time, however, the decrypted contents are compressed by performing an encoding process with a much lower compression ratio than the compression method (for example, MPEG 2) applied to the video data.

The first device 31 detects the CCI from the received data in an operation 55 and in an operation 56, the first device 31 stores the detected CCI. In an operation 57, the first device 31 generates the packets including the compressed video data and the stored CCI. The first device 31 generates the MPEG-TS packets, which satisfy the transmission specification for the IEEE 1394 bus.

Finally, in an operation 58, the first device 31 transmits the MPEG-TS packets to the second device 32 through the IEEE 1394 bus 33. Specifically, the first device 31 protects the IEEE 1394 bus 33 according to the DTCP, and transmits the MPEG-TS packet to the second device 32 through the IEEE 1394 bus 33.

According to the exemplary, non-limiting embodiments of the present invention, unauthorized copying cannot be performed even of the decrypted video data. In particular, the unauthorized copying is prevented by having the packets which have the CCI added to the video data that are decoded from the encrypted and compressed video data. Consequently, the illegal distribution of the decrypted video data may be effectively prevented. Specifically, the exemplary, non-limiting embodiments of the present invention can serve as the fundamental solution to the illegal distribution of video data under the environment of the IEEE 1394 specification, which has been adopted as the next-generation high speed serial bus specification.

The present invention, by way of an example only, can also be embodied as computer-readable codes on a computer-readable recording medium. The computer-readable recording medium is any data storage device that can store data which can be thereafter read by a computer system. Examples of the computer-readable recording medium include read-only memory (ROM), random-access memory (RAM), CD-ROMs, and carrier waves (such as data transmission through the Internet).

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of transmitting copy control information, the method comprising:
decoding compressed contents into prior-to-compression contents;
generating packets comprising the decoded contents and the copy control information; and
transmitting the packets through a predetermined link.

2. The method of claim 1, further comprising storing the copy control information, wherein the stored copy control information is the copy control information added to the decoded contents.

3. The method of claim 1 or claim 2, further comprising decrypting encrypted and compressed contents into prior-to-encryption compressed contents, wherein the decrypted compressed contents are decoded.

4. The method of any preceding claim, wherein the contents are video data and the predetermined link is an IEEE 1394 bus.

5. The method of claim 4, wherein the packets are generated in an MPEG-TS format which satisfies transmission specifications of the IEEE 1394 bus.

6. The method of any preceding claim, wherein the packets are transmitted through a predetermined link protected according to DTCP.

7. An apparatus for transmitting copy control information, the apparatus comprising:
a decoder (213, 313) for decoding compressed contents into prior-to-compression contents;
a packet generator (215, 316) for generating packets comprising the decoded contents and the copy control information; and
a transmitter (216, 317) for transmitting the packets through a predetermined link.

8. The apparatus of claim 7, further comprising a CCI storing unit (214, 315) for storing the copy control information, wherein the packet generator (215, 316) generates packet comprising the stored copy control information and the decoded contents.

9. A computer-readable recording medium storing a method of transmitting copy control information, the method comprising:
decoding compressed contents into prior-to-compression contents;
generating packets comprising the decoded contents and the copy control information; and
transmitting the packets through a predetermined link.

10. A method of transmitting copy control information, the method comprising:
decoding contents compressed in a first compression operation into prior-to-compression contents;
compressing the decoded contents by encoding the decoded contents in a second compression operation having a lower compression ratio than the first compression operation;
generating packets comprising the contents compressed by the second compression operation and the copy control information; and
transmitting the packets through a predetermined link.

11. The method of claim 10, further comprising storing the copy control information, wherein the stored copy control information is the copy control information added to the compressed contents.

12. The method of claim 10 or claim 11, further comprising decrypting encrypted and compressed contents into prior-to-encryption compressed contents, wherein the decrypted compressed contents are decoded.

13. The method of any one of claims 10-12, wherein the contents are video data and the predetermined link is an IEEE 1394 bus.

14. The method of claim 13, wherein the packets are generated in an MPEG-TS format which satisfies transmission specifications of the IEEE 1394 bus.

15. The method of any one of claims 10-14, wherein the packets are transmitted through a predetermined link protected according to DTCP.

16. An apparatus for transmitting copy control information, the apparatus comprising:
a decoder (313) for decoding contents compressed in a first compression operation into prior-to-compression contents;
an encoder (314) for compressing the decoded contents by encoding the decoded contents in a second compression operation having a lower compression ratio than the first compression operation;
a packet generator (316) for generating packets comprising the compressed contents and the copy control information; and
a transmitter (317) for transmitting the packets through a predetermined link.

17. The apparatus of claim 16, further comprising a CCI storing unit (315) for storing the copy control information, wherein the packet generator (316) generates packets comprising the copy control information and the compressed decoded contents.

18. A computer-readable recording medium storing a method of transmitting copy control information, the method comprising:
decoding contents compressed in a first compression operation into prior-to-compression contents;
compressing the decoded contents by encoding the decoded contents in a second compression operation having a lower compression ratio than the first compression operation;
generating packets comprising the compressed contents and the copy control information; and
transmitting the packets through a predetermined link.
